# EUROPEAN PATENT SPECIFICATION

(11) **EP 3 316 658 B1**
(45) Date of publication and mention of the grant of the patent: **14.06.2023**
(21) Application number: 15896174.8
(22) Date of filing: 18.11.2015
(51) Int. Cl.: H04W 84/20, H04W 4/02

(54) **METHOD AND DEVICE FOR SELECTING LEADING VEHICLE IN AUTOMOTIVE FLEET**
VERFAHREN UND VORRICHTUNG ZUR AUSWAHL EINES VORAUSFAHRENDEN FAHRZEUGS IN EINER AUTOMOBILFLOTTE
PROCÉDÉ ET DISPOSITIF DE SÉLECTION DE VÉHICULE PRINCIPAL DANS UN PARC AUTOMOBILE

(30) Priority: 26.06.2015 CN 201510363040
(43) Date of publication of application: 02.05.2018
(73) Proprietor: ZTE Corporation, Shenzhen, Guangdong 518057 (CN)
(72) Inventor: MA, Zijiang, Shenzhen Guangdong 518057 (CN); XU, Hui, Shenzhen Guangdong 518057 (CN); LU, Chen, Shenzhen Guangdong 518057 (CN)
(74) Representative: Aipex B.V.
(86) International application number: PCT/CN2015/094949
(87) International publication number: WO 2016/206290

(56) References cited:
- WO-A1-2015/032436
- CN-A- 102 307 373
- CN-A- 102 867 422
- CN-A- 103 781 198
- US-A1- 2010 256 835
- US-A1- 2014 304 383
- ARKIAN HAMID REZA ET AL: "A Cluster-Based Vehicular Cloud Architecture with Learning-Based Resource Management", 2014 IEEE 6TH INTERNATIONAL CONFERENCE ON CLOUD COMPUTING TECHNOLOGY AND SCIENCE, IEEE, 15 December 2014 (2014-12-15), pages 162-167, XP032735197, DOI: 10.1109/CLOUDCOM.2014.157 [retrieved on 2015-02-09]
- PRITHWISH BASU ET AL: "A Mobility Based Metric for Clustering in Mobile Ad Hoc Networks", MCL TECHNICAL REPORT, XX, XX, 15 January 2001 (2001-01-15), pages 1-11, XP002333506,

## Description

### TECHNICAL FIELD

The present invention relates to the communication field, and specifically to a method and device for selecting a leading vehicle in a vehicle group.

### BACKGROUND

With the development of wireless multimedia services, requirements on higher data rate and better user experience is growing, thereby requiring the traditional cellular network to have greater capability and coverage. On the other hand, in scenarios such as public security, social network, data sharing at short distance, local advertisement, requirements for Proximity Services (PS), through which a person may know and communicate with neighboring people or things, gradually increase. The traditional cellular network centers on a base station, and is significantly limited in support for high data rate and proximity services. In such a background, Device-to-Device (D2D) technology representing a new development direction of the technology of communications emerges. The application of the D2D technology may reduce the burden of the cellular network and power consumption of a user equipment, enhance data rate and improve the robustness of the network infrastructure, so as to satisfy the requirements of high data rate and proximity services described above.

The D2D technology in the related art may operate in an authorized or unauthorized frequency band, and allows a plurality of user equipments (UE) supporting D2D function (i.e., D2D UE) to discover/communicate directly with or without the network infrastructure.

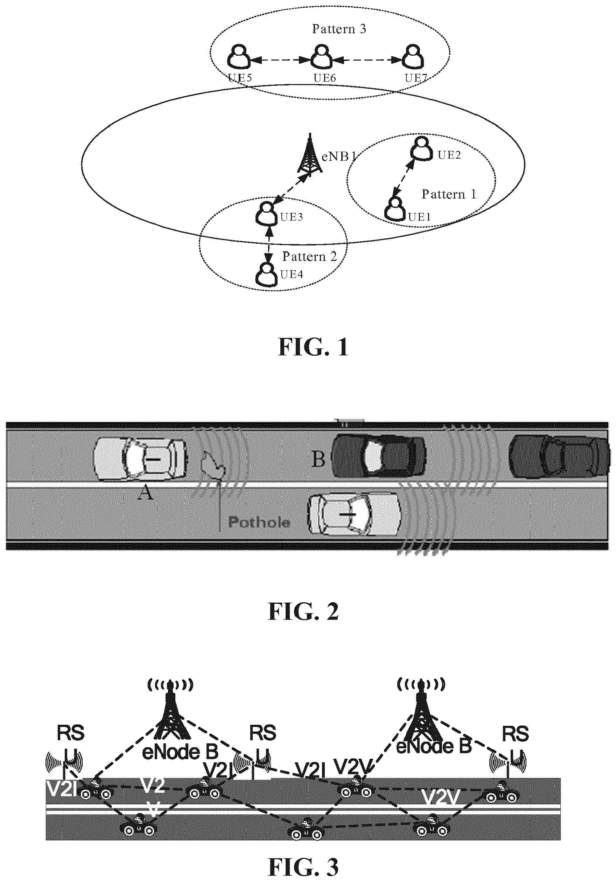

FIG. 1 is a schematic diagram illustrating the discovery/communication of a D2D direct communication system in the related art. As illustrated in FIG. 1, the D2D technology is mainly implemented in three types of patterns described below. In pattern 1, a data interaction is performed between UE 1 and UE 2 under the coverage of a cellular network, and the user plane data does not pass through the network infrastructure. In pattern 2, the UE in an area with poor coverage/without coverage relays the transmission. In this case, UE 4 with poor signal quality is allowed to communicate with a network via UE 3 covered by the network, thereby facilitating the Operator to expand coverage and increase capability. In pattern 3, UEs can communicate with each other directly when earthquake or emergency occurs and the cellular network malfunctions. In this case, both of the control plane data and user plane data among UE 5, UE 6 and UE 7 do not pass through the network infrastructure, and the data communication is single hopping or multi-hopping.

In addition, the D2D technology in the related art includes D2D discovery technology and D2D communication technology. The D2D discovery technology refers to the technology for judging/determining whether a first UE is adj acent to a second UE. A user equipment of the D2D can discover another user equipment of the D2D by transmitting or receiving a discovery signal/information. The D2D communication technology refers to the technology through which the user equipments of the D2D may communicate part or all of the communication data directly without using the network infrastructure.

Based on the characteristics and advantages of the D2D technology described above, it is proposed in the prior art to implement applications of Internet of Vehicle (IOV) using wireless cellular communication and D2D technology. The IOV supports the following scenarios for communication: instant messaging and vehicle warning. Vehicle warning may include collision warning, lane-change warning, etc. However, in this scenario, the requirements on delay are very strict, and the existing D2D technology cannot meet the requirements.

FIG. 2 is a schematic diagram illustrating vehicular traffic in the related art. As shown in FIG. 2, during the communication through the IOV, the communication between vehicles, which is also called Vehicle to Vehicle (V2V) communication, needs to satisfy the requirements of low delay and high reliability in many scenarios. For example, if a distance between two vehicles is too short (that is, vehicle A is too close to vehicle B), it is required to pay attention to driving safety. In this case, vehicle B fails to quickly prevent collision with vehicle A due to a relay in obtaining information about the location/speed of vehicle A if the information about the location/speed of vehicle A is reported to the network by vehicle A and then sent to vehicle B by a network-side equipment.

FIG. 3 is a schematic diagram illustrating communication through the IOV in the related art. As shown in FIG. 3, during the communication through the IOV, the communication between the vehicle and the network is called as Vehicle to Infrastructure (V2I) communication. The V2I communication is also called as V2R communication, where R refers to a Road Side Unit (RSU). The V2I communication and V2R communication refer to the communication between a vehicle and the network. The network-side equipment may be a RSU, a Node B (eNB), a relay and the like.

It is more appropriate to adopt the V2V communication in application scenarios related to vehicle safety. Further, the V2V communication may adopt the above D2D technology defined by the 3rd Generation Partnership Project (3GPP). Each vehicle supporting the V2V communication needs to obtain a resource necessary for communication (e.g., physical resources such as frequency and time slot of communication) to implement the V2V communication. In the case that the V2V communication adopts the D2D technology defined by the 3GPP, resources necessary for the V2V communication may be obtained through a contention mechanism. For example, a vehicle which obtains the resource first may use the resource first. However, through such mechanism, resource congestion and collision will occur if there are a plenty of vehicles in an area. For example, there is a resource block that has been allocated in advance, and a plurality of vehicles use a same resource including frequency resource and slot resource. As a result, none of these vehicles is able to use the resource, and information of these vehicles cannot be transmitted. Therefore, in the V2V communication, collision may easily occur if the vehicles obtain resources in the resource pool through a contention mechanism, resulting in that information of these vehicles cannot be sent out timely.

In other words, in the case that there are a plenty of vehicles in one area, the network may allocate and schedule resources for each of the vehicles to avoid the congestion caused by the resource contention among the vehicles. In this way, the vehicles will not simultaneously use the same resource in the V2V communication, so that information of each vehicle is sent out timely. That is to say, the V2V communication is required in the IOV application scenario related to vehicle safety, and delay or communication failure of the IOV, caused by resource collision during the V2V communication of the vehicles in the area with crowded vehicles, is required to be avoided.

In view of the above, in the related art, it is difficult for the network-side equipment to allocate and schedule resources for each vehicle in a vehicle fleet in the case that there are a plenty of vehicle fleets in one area, and no effective approaches regarding this matter has been proposed yet.

Document "A cluster-based vehicular cloud architecture with learning-based resource management", Arkian Hamid Reza et al. proposes a new vehicular cloud architecture used clustering technique to group vehicles and provide resources cooperatively.

Document US 2014/0304383 A1 provides a method for clustering devices in M2M networks to minimize collisions.

### SUMMARY

The present invention provides a method and device for selecting a leading vehicle in a vehicle group, according to the independent claims, so as to solve the problem in the related art that it is difficult for the network-side equipment to allocate and schedule resources for each vehicle in a vehicle group in the case that there are a plenty of vehicle groups in one area. Further improvements are provided in the dependent claims.

The invention is set out in the appended set of claims.

The present invention solves the problem in the related art that, in the case there are a plenty of vehicles in an area, the network-side equipment fails to allocate and schedule resources for each vehicle of the vehicle groups, thus filling in the blank in the related art.

### BRIEF DESCRIPTION OF DRAWINGS

The accompanying drawings described herein provide a understanding of the present invention and constitute a part of the present application. The exemplary embodiments of the present invention and descriptions thereof are used for explaining the present invention. Among the drawings.
FIG. 1 is a schematic diagram illustrating discovery/communication of a D2D direct communication system in the related art.
FIG. 2 is a schematic diagram illustrating vehicular traffic in the related art.
FIG. 3 is a schematic diagram illustrating communication through IOV in the related art.
FIG. 4 is a flowchart illustrating a method for selecting a leading vehicle in a vehicle group according to an embodiment of the present invention.
FIG. 5 is a block diagram illustrating a device for selecting a leading vehicle in a vehicle group according to an embodiment of the present invention.
FIG. 6 is a block diagram illustrating a first alternative structure of a device for selecting a leading vehicle in a vehicle group according to an embodiment of the present invention.
FIG. 7 is a block diagram illustrating a second alternative structure of a device for selecting a leading vehicle in a vehicle group according to an embodiment of the present invention.
FIG. 8 is a flowchart illustrating a method for autonomously selecting/reselecting a leading vehicle in a vehicle group by members in the vehicle group according to an embodiment of the present invention.

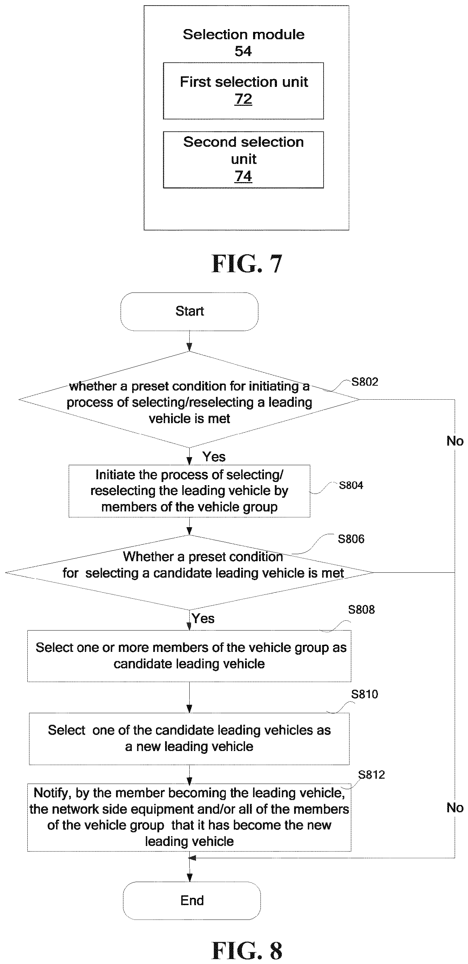

Where the embodiment related to FIG 8 is not according to the claimed invention and are present for illustration purposes.

### DETAILED DESCRIPTION

It should be noted that embodiments of the present application and features thereof may be combined with each other. Embodiments of the present invention will be described below with reference to the accompanying drawings.

The background of the embodiments of the present invention is described below. In the related art, based on collision warning systems communicated with each other, a real-time information interaction between vehicles or between the vehicle and the infrastructure at the road side is implemented though advanced wireless cellular communication technology, so as to inform each other of current state and information about road environment, cooperate to sense dangers on road and provide various collision warning information to avoid road traffic accidents. The current state includes the location, speed, acceleration of a vehicle and vehicle routing and so on. However, the V2V communication is adopted in application scenarios related to vehicle safety, and the V2V communication may adopt the D2D technology defined by the 3GPP. Each vehicle supporting the V2V communication needs to obtain a resource necessary for communication to implement the V2V communication. In the case that the V2V communication adopts the D2D technology, resources necessary for the V2V communication may be obtained through a contention mechanism. For example, a vehicle which obtains the resource first may use the resource first. However, through such mechanism, resource congestion and collision will occur if there are a plenty of vehicles in an area. Therefore, in the V2V communication, collision may easily occur if the vehicles obtain resources in the resource pool through a contention mechanism, resulting in that information of these vehicles cannot be sent out timely.

In embodiments of the present invention, the vehicles in the IOV are managed as a vehicle fleet. Each vehicle fleet includes a plurality of vehicles. Each vehicle has a unit for bearing the IOV communication, which is also called as On-Board Unit (OBU). In the 3GPP, each vehicle may be deemed as a user equipment (UE). Therefore, the vehicle fleet is a UE group.

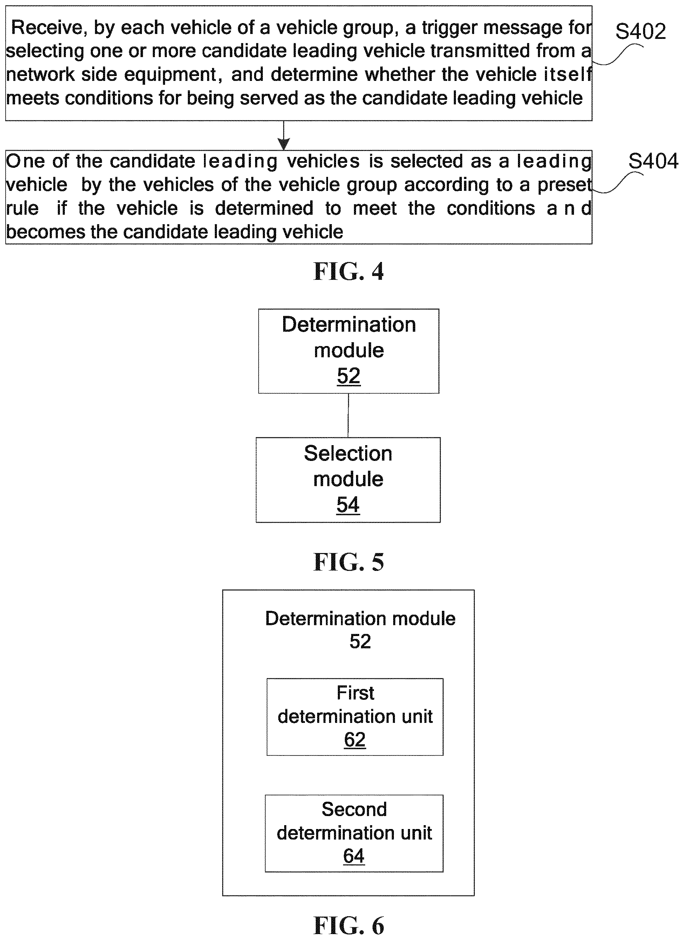

Based on the above, the present embodiment provides a method for selecting a leading vehicle in a vehicle group. FIG. 4 is a flowchart illustrating a method for selecting a leading vehicle in a vehicle group according to an embodiment of the present invention. As shown in FIG. 4, the method includes steps described below.

In step S402, each vehicle in a vehicle group receives a trigger message transmitted from a network-side equipment for selecting one or more candidate leading vehicles, and determines whether the vehicle itself meets conditions for being served as the candidate leading vehicle.

In step S404, if the vehicle is determined to meet the conditions and becomes a candidate leading vehicle, one of the vehicles served as the candidate leading vehicles is selected as a leading vehicle by the vehicles of the vehicle group according to a preset rule. The leading vehicle is authorized to manage the vehicle group.

In steps S402 and S404 of the present embodiment, after receiving the trigger message transmitted from the network-side equipment for selecting one or more candidate leading vehicles, each vehicle of the vehicle group determines whether the vehicle itself meets the conditions required for being served as the candidate leading vehicle; if the vehicle is determined to meet the conditions, the vehicles in the vehicle group select one of the vehicles served as the candidate leading vehicles as the leading vehicle according to the preset rule. The leading vehicle is authorized to manage the vehicle group. According to the present embodiment, the leading vehicle is selected from the vehicle group and manages the vehicle group. Therefore, the problem in the related art that the network-side equipment fails to allocate and schedule resources for each vehicle in the vehicle group in the case that there are a plenty of vehicle groups in an area is solved, filling in the blank in the related art.

In is noted that the trigger message mentioned in the present embodiment may be a system broadcast message or dedicated signaling of the network-side equipment in an alternative embodiment. The dedicated signaling may be the signaling in the V2I communication. Therefore, in alternative embodiments of the present invention, when the trigger message is carried with the conditions required for being served as the candidate leading vehicle, the vehicle of the vehicle group determines whether the vehicle itself meets the conditions required for being served as the candidate leading vehicle in step S402 in manners described below.

In a first manner, each vehicle of the vehicle group reads the trigger message, and determines whether the vehicle itself meets the conditions required for being served as the candidate leading vehicle.

In a second manner, if the vehicle of the vehicle group fails to read the trigger message, the vehicle determines whether the vehicle may be served as the candidate leading vehicle according to locally stored conditions.

As can be seen from the first and second manners described above, if the vehicle which has received the trigger message can read the trigger message, the vehicle determines whether the vehicle itself may be served as the candidate leading vehicle according to the conditions, carried by the trigger message, required for being served as the candidate leading vehicle; if the vehicle fails to read the trigger message, the vehicle determines, once triggered by the trigger message, whether the vehicle may be served as the candidate leading vehicle according to the locally stored conditions. In the second manner, it is determined whether the vehicle may be served as the candidate leading vehicle based on the locally stored conditions. However, the locally stored conditions are configured by the network-side equipment and read by the vehicle of the vehicle group under the original network. That is to say, the conditions required for being served as the candidate leading vehicle in the first and second manners are both derived from the network-side equipment.

In addition, in embodiments of the present invention, the conditions required for being served as the candidate leading vehicle described in the above embodiments include: requirement on equipment capability of the vehicle, information on location of the vehicle in the vehicle group and information on signal quality of equipments of the vehicle. That is to say, in specific application scenarios, it is required to determine whether the requirement on the equipment capability of the vehicle is greater than a preset threshold, whether the location of the vehicle is within a central range of the vehicle group, or whether the signal quality of equipments of the vehicle is greater than a preset threshold. To be sure, the above conditions are merely optional implementations of the embodiment, and do not limit the present invention. Other conditions can be used to determine equipment capability of the vehicle also fall within the scope of the present invention. Conditions required for being served as the candidate leading vehicle may be added according to requirements in corresponding specific application scenarios (e.g., adding performance of the vehicle).

In step S404, the vehicles of the vehicle group select one of the vehicles served as the candidate leading vehicles as the leading vehicle according to a preset rule as in the third manner described below.

In the third manner, the vehicles of the vehicle group select one of the vehicles served as the candidate leading vehicles, which is better than other candidate leading vehicles in every condition, as the leading vehicle.

In a specific application scenario of the third manner, each candidate leading vehicle notifies other vehicles (including other candidate leading vehicles) of the vehicle group of its own conditions, such as the UE ID, requirement on UE capability, requirement on UE signal quality, requirement on location of the vehicle in the vehicle group. Moreover, each candidate leading vehicle may receive information from other candidate leading vehicles. In this way, each candidate leading vehicle compare its own conditions with the conditions of other candidate leading vehicles. Therefore, a candidate leading vehicle the conditions of which are better than those of any other candidate leading vehicles is obtained, and selected as the new leading vehicle.

Furthermore, if the conditions of the candidate leading vehicles are equivalent in the third manner, one of the following vehicles is selected as the leading vehicle by the vehicles of the vehicle group: a vehicle with minimal equipment identifier; a vehicle with greatest equipment capability; a vehicle with optimal signal quality; and a vehicle with an optimal location in the vehicle group.

In the third and fourth manners as described above, upon overall consideration of all of the conditions of the vehicles, a vehicle with optimal comprehensive conditions is selected as the leading vehicle; or, if the comprehensive conditions of vehicles are equivalent, the leading vehicle is selected based on the priority.

Moreover, after one or more candidate leading vehicles are selected from the vehicle group, the method of the present embodiment further includes steps described below.

In step S11, one of vehicles served as the candidate leading vehicles transmits a notification message indicating that the vehicle has become the candidate leading vehicle to a vehicle not served as the candidate leading vehicle in the vehicle group.

In step S12, if it is determined according to the notification message that the conditions of the vehicle not served as the candidate leading vehicle are better than those of the vehicle served as the candidate leading vehicle, the vehicle not served as the candidate leading vehicle becomes a candidate leading vehicle. Alternatively, after receiving the notification message, the vehicle not served as the candidate leading vehicle in the vehicle group prevents itself from becoming a candidate leading vehicle.

In steps S11 and S 12, the vehicle which first became the candidate leading vehicle transmits a notification message indicating that the vehicle has become the candidate leading vehicle to other vehicles in the vehicle group. After receiving the notification message, a vehicle that has not become a candidate leading vehicle will operate in the two manners: (1) the vehicle determines whether the conditions thereof are better than those of the candidate leading vehicle transmitting the notification message; the vehicle becomes the candidate leading vehicle if the conditions of the vehicle are better; otherwise, the vehicle does not become the candidate leading vehicle; (2) the vehicle will not become the candidate leading vehicle once the notification message is received. Through the above two manners, the number of candidate leading vehicles can be reduced, and the interaction among candidate leading vehicles can be reduced.

The method of the present embodiment further relates to a scheme for reselecting the leading vehicle. During a period from a time that one of the vehicles served as the candidate leading vehicles is selected as the leading vehicle by the vehicles in the vehicle group according to the preset rule to a time that the current leading vehicle of the vehicle group is authorized to manage the vehicle group, a trigger message for selecting the candidate leading vehicles is transmitted from the network-side equipment and/or the current leading vehicle to the vehicles in the vehicle group, where the trigger message is carried with the conditions required for being served as the candidate leading vehicle; the vehicle of the vehicle group determines whether the vehicle itself meets the conditions required for being served as the candidate leading vehicle.

In other words, when the current leading vehicle does not have a management authority, the trigger message for selecting the candidate leading vehicles is transmitted from the current leading vehicle or the network-side equipment to other vehicles in the vehicle group. The selection of the candidate leading vehicles and the selection of the leading vehicle are the same as the selection of the leading vehicle described above.

The present embodiment further provides a device for selecting a leading vehicle of a vehicle group. The device is configured to implement the embodiment and alternative implementations described above, which are not described herein. The term "module" used hereafter may be a combination of software and/or hardware for achieving a predetermined function. While the device described in the embodiment below is preferably implemented in software, implementations in hardware or a combination of software and hardware are also possible and contemplated.

FIG. 5 is a structure block diagram illustrating a device for selecting a leading vehicle of a vehicle group according to an embodiment of the present invention. As shown in FIG. 5, the device includes: a determination module 52, configured to determine whether a vehicle in a vehicle group meets conditions required for being served as a candidate leading vehicle after the vehicle receives a trigger message for selecting one or more candidate leading vehicles transmitted from a network-side equipment; and a selection module 54, coupled to the determination module 52 and configured to, when the vehicle is determined to meet the conditions and becomes the candidate leading vehicle, select one of the vehicles served as the candidate leading vehicles as the leading vehicle according to a preset rule, and the leading vehicle of the vehicle group is authorized to manage the vehicle group.

In is noted that, in an optional implement of the present embodiment, the trigger message mentioned in the present embodiment may be a system broadcast message of the network-side equipment or dedicated signaling. The dedicated signaling may be the signaling in the V2I communication. The trigger message is carried with the conditions required for being served as the candidate leading vehicle. FIG. 6 is a block diagram illustrating a first alternative structure of a device for selecting a leading vehicle of a vehicle group according to an embodiment of the present invention. As illustrated in FIG. 6, based on the trigger message, the determination module 52 includes: a first determination unit 62, configured to read the trigger message and determine whether the vehicle meets the conditions required for being served as the candidate leading vehicle; or, a second determination unit 64, configured to determine whether the vehicle may be served as the candidate leading vehicle based on locally stored conditions when the vehicle of the vehicle group fails to read the trigger message.

Although the second determination unit 64 is configured to determine whether the vehicle may be served as the candidate leading vehicle based on the locally stored conditions, the locally stored conditions are the conditions required for being served as the candidate leading vehicle, which are configured by the network-side equipment and read when the vehicle of the vehicle group is within the coverage of the original network. In other words, the conditions required for being served as the candidate leading vehicle adopted by the first determination unit 62 and the second determination unit 64 both derive from the network-side equipment.

Optionally, the conditions required for being served as the candidate leading vehicle include at least one of the followings: requirement on equipment capability of the vehicle; information on the location of the vehicle in the vehicle group and information on signal quality of equipments of the vehicle. That is to say, in specific application scenarios, it is required to determine whether the requirement on the equipment capability of the vehicle is greater than a preset threshold, whether the location of the vehicle is within a central range of the vehicle group, or whether the signal quality of equipments of the vehicle is greater than a preset threshold. To be sure, the above conditions are merely optional implementations of the embodiment, and do not limit the present invention. Other conditions that may be used to determine equipment capability of the vehicle also fall within the scope of the present invention. Conditions required for being served as the candidate leading vehicle may be added according to requirements in corresponding specific application scenarios (e.g., adding performance of the vehicle).

FIG. 7 is a block diagram illustrating a second alternative structure of a device for selecting a leading vehicle of a vehicle group according to an embodiment of the present invention. As illustrated in FIG. 7, the selection module 54 includes a first selection unit 72 or a second selection unit 74. The first selection unit 72 is configured to select one of the vehicles served as the candidate leading vehicles, which is better than other candidate leading vehicles in every condition, as the leading vehicle. The second selection unit 74 is configured to, when the conditions of the vehicles served as the candidate leading vehicles are equivalent, select one of the followings as the leading vehicle: a vehicle with the minimal equipment identifier; a vehicle with greatest equipment capability; a vehicle with optimal signal quality of the equipments; and a vehicle with an optimal location in the vehicle group.

As for the first selection unit 72, a specific application scenario is as follows: each candidate leading vehicle notifies other vehicles (including other candidate leading vehicles) in the vehicle group of its own conditions, such as the UE ID, requirement on UE capability, requirement on UE signal quality, requirement on location in the vehicle group. Moreover, each candidate leading vehicle may receive information from other candidate leading vehicles. In this way, each candidate leading vehicle is able to compare its own conditions with the conditions of other candidate leading vehicles. Therefore, a candidate leading vehicle the conditions of which are better than those of any other candidate leading vehicles is obtained, and selected as the new leading vehicle. The second selection unit 74 performs corresponding operations when the conditions required for being served as the candidate leading vehicles used in the first selection unit are equivalent.

The present invention will be described below in combination with an alternative embodiment not covered by the claims.

The alternative embodiment provides a method for autonomously selecting/reselecting a leading vehicle by members of a vehicle group consisting of a plurality of vehicles, as well as a method for selecting/reselecting a leading vehicle by the network-side equipment.
I. Regarding the method for autonomously selecting/reselecting the leading vehicle by members of the vehicle group

The method includes steps described below.

A process of "autonomously selecting/reselecting the leading vehicle" is initiated by the members (vehicles) of the vehicle group according to a first preset condition.

The first preset condition includes at least one of the followings: 1) the network-side equipment instructs the members of the vehicle group to autonomously select the leading vehicle; 2) the current leading vehicle does not have control/management capability of the leading vehicle any more.

It is noted that, as for the condition 1), the network-side equipment may notify the members of the vehicle group through a system broadcast message or a dedicated signaling (i.e., through the V2I communication). As for the condition 2), for example, when the current leading vehicle is about to leave the vehicle group, the current leading vehicle may notify other members of the vehicle group through the V2V communication that it is no longer the leading vehicle. The V2V communication in the alternative embodiment may be implemented in D2D unicast mode or D2D broadcast mode. Alternatively, the V2V communication may also be implemented in the following mode: the network-side equipment notifies the members of the vehicle group through the V2I communication that the current leading vehicle is no longer the leading vehicle, and authorizes the members of the vehicle group to reselect a leading vehicle.

One or more members of the vehicle group are determined as the candidate leading vehicles according to a second preset condition.

Each member of the vehicle group can determine whether it meets the conditions required for being served as the candidate leading vehicle according to the second preset condition. After being determined as a candidate leading vehicle, the member notifies other members of the vehicle group that it has become the candidate leading vehicle.

Multiple members of the vehicle group may become the candidate leading vehicles. After becoming the candidate leading vehicle, each member of the vehicle group transmits a notification message indicating that it has become the candidate leading vehicle to all the members (including other candidate leading vehicles) of the vehicle group. Through the notification message, the members of the vehicle group may know which or what members have become the candidate leading vehicles. The content of the notification message includes one or more of the followings: an identifier of the candidate leading vehicle; information on capability of the candidate leading vehicle; signal quality of the candidate leading vehicle; information on the location of the candidate leading vehicle (e.g., a relative location of the candidate leading vehicle in the vehicle group, or absolute location coordinates of the candidate leading vehicle).

The notification message may be transmitted through the V2V communication between the candidate leading vehicle and the members of the vehicle group, or through the D2D technology defined by the 3GPP. In this case, the air interface between vehicles is PC5 interface defined by the D2D technology of the 3GPP. The V2V communication may be implemented in D2D unicast mode (e.g., Point-to-Point (PTP) mode) or D2D multicast mode (e.g., Point-to-Multipoint (PTM) mode).

The second preset condition mentioned in step S504 includes one or more conditions described below:
condition 1: the network-side equipment notifies the members of the vehicle group of conditions required for being served as the candidate leading vehicle;
condition 2: if the member of the vehicle group fails to read system information block (SIB) the member take use of locally stored conditions required for being served as the candidate leading vehicle;
condition 3: a member which has received the notification from a candidate leading vehicle will stop trying to become a candidate leading vehicle, while a member which has not received the notification from any candidate leading vehicle will become a candidate leading vehicle according to the locally stored conditions required for being served as the candidate leading vehicle;
condition 4: although a member of the vehicle group has received the notification from a candidate leading vehicle, the member of the vehicle group holds that it will provide better management/control to the vehicle group once becoming the new leading vehicle.

As for condition 1 described above, the network-side equipment may notify the member of the vehicle group through a system broadcast message or a dedicated signaling. As for condition 2 described above, the locally stored conditions required for being served as candidate leading vehicle of the member of the vehicle group may be conditions which are configured by the network-side equipment and read by the member when the member was within the coverage of network. The conditions required for being served as the candidate leading vehicle may be the conditions of network configured which are read when the member of the vehicle group registers on the network.

As for condition 3 described above, a member of the vehicle group will stop trying to become a candidate leading vehicle after receiving the notification from one candidate leading vehicle. In other words, if the member of the vehicle group receives the notification from one candidate leading vehicle, it will not become the candidate leading vehicle. In this way, the number of candidate leading vehicles can be reduced, and the interaction among candidate leading vehicles can be reduced.

As for condition 4 described above, although a member of the vehicle group has received the notification from one candidate leading vehicle, it still determines whether it can provide better control/management for the vehicle group according to the conditions required of being served as the candidate leading vehicle. If it is determined that the member of the vehicle group can provide better control/management, the member of the vehicle group also becomes a candidate leading vehicle, and notifies other members (including the candidate leading vehicles of the vehicle group). Specifically, if the member of the vehicle group determines that it can provide better control/management for the vehicle group, i.e., if the member of the vehicle determines that the condition thereof (e.g., UE capability, location in the vehicle group) is better than that of other candidate leading vehicles, the member of the vehicle group also becomes the candidate leading vehicle. Otherwise, the member of the vehicle group will not become the candidate leading vehicle.

One of the candidate leading vehicles is selected as a new leading vehicle.

If there are multiple candidate leading vehicles in the vehicle group, one of candidate leading vehicles is selected as the new leading vehicle. The new leading vehicle may be selected from the multiple candidate leading vehicles in the following manners.

In a first manner, each candidate leading vehicle notifies other members (including other candidate leading vehicles) of the vehicle group of related information. The related information contains the UE ID, requirement on UE capability, requirement on UE signal quality, requirement on the location in the vehicle group, etc. Then, each candidate leading vehicle may receive information from other candidate leading vehicles, such that each candidate leading vehicle compares its condition with that of other candidate leading vehicles. Through such comparison, one of the candidate leading vehicles is found to be better than other candidate leading vehicles in conditions, and is selected as the new leading vehicle.

In a second manner, if it is found based on the above first manner that the conditions of some candidate leading vehicles are equivalent, one candidate leading vehicle is selected as the new leading vehicle according to priorities. For example, the new leading vehicle may have a minimal UE ID, or optimal UE capability, or optimal UE signal quality, or optimal location in the vehicle group.

In specific application scenarios, for example, when there are a plurality of candidate leading vehicles, in order to avoid multiple communications and competitions, the candidate leading vehicle with the minimal UE ID, the candidate leading vehicle at a most central location in the vehicle group or the candidate leading vehicle with most powerful UE capability is selected as the new leading vehicle. Alternatively, the plurality of candidate leading vehicles are sorted according to their IDs, information on capability and information on location, so as to select one of candidate leading vehicles as the new leading vehicle.

After becoming the new leading vehicle, the member of the vehicle group notifies the network-side equipment and/or other members of the vehicle group that it has become the new leading vehicle.

The new leading vehicle notifies the network-side equipment via the V2I communication. For example, the new leading vehicle notifies other members of the vehicle group via the V2V communication in D2D unicast mode defined by the 3GPP or D2D multicast mode defined by the 3GPP.

The content notified by the new leading vehicle includes at least the followings: an identifier of the new leading vehicle; an identifier of the vehicle group (Vehicle group ID); information of the members of the vehicle group, for example, the UE ID of each member of the vehicle group. The content may further include speed of the vehicle group and/or position information of the vehicle group and/or the number of members in the vehicle group. The speed of the vehicle group refers to an average speed of the entire vehicle group, rather than the speed of a certain member of the vehicle group. The position of the vehicle group refers to the position of the entire vehicle group, rather the position of a certain member of the vehicle group. The information on the number of members of the vehicle group may be represented by "group size". For example, the content notified by the new leading vehicle includes: the ID of the leading vehicle (Leading vehicle ID); the ID of the vehicle group (Vehicle group ID); the average speed of the vehicle group (Vehicle group speed); the position of the vehicle group (Vehicle group position); Vehicle group size and the ID of the member of the vehicle group (Vehicle member ID list).

The following embodiment related FIG. 8 is not according to the invention and are present for illustration purposes only.

FIG. 8 is a flowchart illustrating a method for autonomously selecting/reselecting a leading vehicle of a vehicle group by members of the vehicle group according to an optional embodiment of the present invention. The method as illustrated in FIG. 8 includes steps described below.

In step S802, it is determined whether a preset condition for initiating a process of selecting/reselecting a leading vehicle is met; if the preset condition is met, the method goes to step S804.

In step S804, the process of selecting/reselecting the leading vehicle is initiated by the members of the vehicle group.

In step S806, it is determined whether a preset condition for selecting one or more candidate leading vehicles is met; if the condition is met, the method goes to step S808.

In step S808, one or more members of the vehicle group are selected as the candidate leading vehicles.

In step S810, one of the candidate leading vehicles is selected as a new leading vehicle.

In step S812, the member becoming the new leading vehicle of the vehicle group notifies the network-side equipment and/or all of the members of the vehicle group that it has become the new leading vehicle.

It is noted that, under the coverage of a cellular network, the network may directly select a leading vehicle according to information of members of the vehicle group, and notifies the members of the vehicle group that a member of the vehicle group has become the new leading vehicle.

### II. Regarding the method for selecting/reselecting the leading vehicle by the network-side equipment

When the network-side equipment determines that it is required to select/reselect a leading vehicle for a vehicle group and the V2V communication among the members of the vehicle group should be controlled/managed by the leading vehicle, the network-side equipment notifies the members of the vehicle group via the V2I communication. The V2I communication may be implemented through one or more of the followings: single cell Point-to-Multipoint (SC-PTM), Point-to-Multipoint (PTM) and Point-to-Point (PTP).

The information notified to the members of the vehicle group by the network-side equipment via the V2I communication at least includes an identifier of the new leading vehicle. The information may also include one or more of the followings: an identifier of the vehicle group (i.e., Vehicle group ID); an identifier of each member of the vehicle group; resource used by the vehicle group and the like.

With respect to the situation of reselecting a leading vehicle from the members of the vehicle group by the network-side equipment, for example, the network-side equipment determines that it is required to reselect a leading vehicle for the vehicle group if it finds that a certain leading vehicle is no longer suitable to be the leading vehicle.

Firstly, the network-side equipment determines that a certain leading vehicle is no longer suitable to be the vehicle group (e.g., the leading vehicle left the vehicle group, or the leading vehicle is located at edges of the vehicle group), the network revokes the authority of control/management of the current leading vehicle. The network-side equipment communicates with the current leading vehicle via the V2I communication, and the bearing thereof is PTP dedicated bearing. Secondly, the network-side equipment selects a member of the vehicle group as the new leading vehicle, and notifies other members of the vehicle group that the member has become the new leading vehicle.

The alternative embodiment, which is not covered by the claims, further relates to a method for selecting/reselecting a leading vehicle from members of the vehicle group by the network-side equipment. The method includes steps described below.

The network-side equipment determines whether the current leading vehicle needs to be changed; if it is to be changed, the network-side equipment notifies the current leading vehicle and/or members of the vehicle group that the current vehicle group is no longer a leading vehicle.

The network-side equipment selects a new leading vehicle.

The network-side equipment notifies a member of the vehicle group to become the new leading vehicle, and notifies other members of the vehicle group that the member has become the new leading vehicle.

As can be seen above, the network-side equipment reselects a leading vehicle from members of the vehicle group on the premise that the current leading vehicle quits from being the leading vehicle voluntarily (i.e., the current leading vehicle releases its authority of control on the vehicle group), or on the premise that the network-side equipment decides to reselect a leading vehicle for the vehicle group.

Firstly, the current leading vehicle notifies the network-side equipment that it quits from being the leading vehicle (i.e., the authority of control/management is released). Moreover, the current leading vehicle notifies other members of the vehicle group that it quits from being the leading vehicle (i.e., the authority of control/management is released). The current leading vehicle notifies the network-side equipment via the V2I communication, and notifies the members of the vehicle group via the V2V communication, the bearing thereof may be D2D unicast mode or D2D multicast mode defined by the 3GPP. Secondly, the network-side equipment selects a member of the vehicle group as a new leading vehicle, and notifies the members of the vehicle group that a certain member has become the new leading vehicle.

The information notified to the members of the vehicle group by the network-side equipment via the V2I communication includes at least the followings: an identifier of the new leading vehicle; an identifier of the vehicle group (e.g., Vehicle group ID); an identifier of each member of the vehicle group (Vehicle ID, which may be identified by UE ID); resource used by the vehicle group and the like.

When the network-side equipment selects a leading vehicle from members of the vehicle group, i.e., when there is no leading vehicle in the vehicle group, the vehicle group is managed/controlled by the network side equipment. Therefore, the network-side equipment selects a member of the vehicle group as the new leading vehicle, and notifies other members of the vehicle group that the certain member has become the new leading vehicle.

In another embodiment, not covered by the claims, a software for implementing the embodiments and alternative implementations described above is provided.

In another embodiment, not covered by the claims, a storage medium for storing the above software is provided. The storage medium includes, but not limited to, CD-ROM, floppy disk, hard disk, erasable read-only memory (EROM) and the like.

Apparently, those skilled in the art shall understand that modules or steps of the present invention described above may be implemented by universal computing devices, which may be integrated in a single computing device or distributed among a network consisting of multiple computing devices. Optionally, the modules or steps may be implemented by program codes which are executable by a computing device; hence, the program codes may be stored in a storage device and executed by a computing device. In some cases, the illustrated or described steps may be performed in an order different from that described herein; the modules or steps may be embodied by respective integrated circuit modules, or some of them may be embodied by a single integrated circuit module. The present invention is not limited to any specific combination of hardware and software.

## Claims

1. A method for selecting a leading vehicle in a vehicle group, the method comprising:
receiving (S402), by each vehicle in the vehicle group, a trigger message for selecting candidate leading vehicles transmitted from a network-side equipment, and determining whether said vehicle itself meets conditions required for being served as the candidate leading vehicle, wherein the conditions comprise a requirement on equipment capability of said vehicle, information on location of the vehicle in the vehicle group and information on signal quality of equipments of the vehicle;
if said vehicle itself is determined to meet the conditions, said vehicle becomes a candidate leading vehicle, and sending, by said vehicle, a first notification message to all vehicles in the vehicle group, wherein the first notification message is configured to notify that said vehicle has become the candidate leading vehicle and to carry parameters of said vehicle, wherein the parameters comprise information on equipment capability of said vehicle, information on location of said vehicle in the vehicle group and information on signal quality of communication equipment in said vehicle; and
after having received said first notification, selecting (S404), by candidate leading vehicles in the vehicle group, one of the candidate leading vehicles as a leading vehicle according to a preset rule involving comparison of the said vehicle's own parameters with the parameters of the candidate leading vehicles and wherein the candidate leading vehicle which is better than any other candidate leading vehicles in every parameter is selected as the leading vehicle, wherein the leading vehicle is authorized to manage the vehicle group.

2. The method according to claim 1, wherein the trigger message is carried with the conditions required for being served as the candidate leading vehicle, and the determining whether said vehicle itself meets conditions required for being served as the candidate leading vehicle comprises one of the followings:
reading, by said vehicle in the vehicle group, the trigger message, and determining whether said vehicle itself meets the conditions required for being served as the candidate leading vehicle carried in the trigger message; and
when said vehicle in the vehicle group fails to read the trigger message, determining, by said vehicle in the vehicle group, whether said vehicle itself is capable of being served as the candidate leading vehicle according to locally stored conditions.

3. The method according to claim 2, wherein
when the candidate leading vehicles have equivalent parameters, selecting, by the candidate leading vehicles in the vehicle group, one of the followings as the leading vehicle: a vehicle with minimal equipment identifier; a vehicle with greatest equipment capability; a vehicle with optimal signal quality of communication equipment and a vehicle with optimal location in the vehicle group.

4. The method according to claim 2, wherein after selecting, by the candidate leading vehicles in the vehicle group, one of the candidate leading vehicles as a leading vehicle according to a preset rule involving comparison of the said vehicle's own parameters with the parameters of the candidate leading vehicles, the method further comprises:
before a current leading vehicle of the vehicle group is authorized to manage the vehicle group, receiving, by each vehicle in the vehicle group, a first trigger message for reselecting candidate leading vehicles transmitted from the network-side equipment and/or the current leading vehicle, wherein the first trigger message is carried with the conditions required for being served as the candidate leading vehicle; and
determining, by each vehicle in the vehicle group, whether parameters of said vehicle itself meet the conditions required for being served as the candidate leading vehicle.

5. The method according to claim 3, wherein after determination of candidate leading vehicles from the vehicle group, the method further comprises:
receiving, by a vehicle not served as the candidate leading vehicle in the vehicle group, a second notification message transmitted from a vehicle served as the candidate leading vehicle, wherein the second notification message indicates that the vehicle from which the second notification message is transmitted has become the candidate leading vehicle; and
after receiving the second notification message, the vehicle not served as the candidate leading vehicle becomes the candidate leading vehicle if it is determined based on the second notification message that parameters of the vehicle not served as the candidate leading vehicle in the vehicle group are better than those of the vehicle served as the candidate leading vehicle; or the vehicle not served as the candidate leading vehicle in the vehicle group prevents itself from being served as the candidate leading vehicle.

6. A device for selecting a leading vehicle of a vehicle group, disposed in each vehicle of the vehicle group and comprising:
a determination module (52) configured to:
determine whether each vehicle in the vehicle group meets conditions required for being served as a candidate leading vehicle after a trigger message for selecting candidate leading vehicles transmitted from a network-side equipment is received, wherein the conditions comprise a requirement on equipment capability of said vehicle, information on location of the vehicle in the vehicle group and information on signal quality of equipments of the vehicle;
a selection module (54) configured to:
if said vehicle itself is determined to meet the conditions, said vehicle becomes a candidate leading vehicle, and a first notification message is sent to all vehicles in the vehicle group, wherein the first notification message is configured to notify that said vehicle has become the candidate leading vehicle and to carry parameters of said vehicle, wherein the parameters comprise information on equipment capability of said vehicle, information on location of said vehicle in the vehicle group and information on signal quality of communication equipment in said vehicle; and
after having received said first notification, select one of the candidate leading vehicles as a leading vehicle according to a preset rule involving comparison of the said vehicle's own parameters with the parameters of the candidate leading vehicles and wherein the candidate leading vehicle which is better than any other candidate leading vehicles in every parameter is selected as the leading vehicle, wherein the leading vehicle is authorized to manage the vehicle group.

7. The device according to claim 6, wherein the trigger message is carried with the conditions required for being served as the candidate leading vehicle, and the determination module (52) comprises at least one of the followings:
a first determination unit (62) configured to read the trigger message, and determine whether said vehicle itself meets the conditions required for being served as the candidate leading vehicle carried in the trigger message; or
a second determination unit (64) configured to, when said vehicle in the vehicle group fails to read the trigger message, determine whether said vehicle is capable of being served as the candidate leading vehicle according to locally stored conditions.

8. The device according to claim 7, wherein the selection module comprises a second selection unit (74) configured to, when the candidate leading vehicles have equivalent parameters, select one of the followings as the leading vehicle: a vehicle with minimal equipment identifier; a vehicle with greatest equipment capability; a vehicle with optimal signal quality of communication equipment and a vehicle with optimal location in the vehicle group.

## Patentansprüche

1. Verfahren zum Auswählen eines vorausfahrenden Fahrzeugs in einer Fahrzeuggruppe, wobei das Verfahren Folgendes umfasst:
Empfangen (S402) durch jedes Fahrzeug in der Fahrzeuggruppe einer Auslösemeldung für das Auswählen von in Frage kommenden vorausfahrenden Fahrzeugen, die von einer netzseitigen Ausrüstung übertragen wird, und Bestimmen, ob das Fahrzeug selbst die Bedingungen erfüllt, die erforderlich sind, um als das in Frage kommende vorausfahrende Fahrzeug bedient zu werden, wobei die Bedingungen eine Anforderung an die Ausrüstungsfähigkeit des Fahrzeugs, Informationen über den Standort des Fahrzeugs in der Fahrzeuggruppe und Informationen über die Signalqualität der Ausrüstungen des Fahrzeugs umfassen;
wenn bestimmt wird, dass das Fahrzeug selbst die Bedingungen erfüllt, wird das Fahrzeug ein in Frage kommendes vorausfahrendes Fahrzeug, und Senden einer ersten Benachrichtigungsnachricht durch das Fahrzeug an alle Fahrzeuge in der Fahrzeuggruppe, wobei die erste Benachrichtigungsnachricht konfiguriert ist, um mitzuteilen, dass das Fahrzeug das in Frage kommende vorausfahrende Fahrzeug geworden ist, und um Parameter des Fahrzeugs zu tragen, wobei die Parameter Informationen über die Ausrüstungsfähigkeit des Fahrzeugs, Informationen über den Standort des Fahrzeugs in der Fahrzeuggruppe und Informationen über die Signalqualität der Kommunikationsausrüstung in dem Fahrzeug umfassen; und
nach dem Empfangen der ersten Benachrichtigung, Auswählen (S404) durch ein in Frage kommendes vorausfahrendes Fahrzeug in der Fahrzeuggruppe eines der in Frage kommenden vorausfahrenden Fahrzeuge als vorausfahrendes Fahrzeug gemäß einer voreingestellten Regel, die einen Vergleich der eigenen Parameter des Fahrzeugs mit den Parametern der in Frage kommenden vorausfahrenden Fahrzeuge beinhaltet, und wobei das in Frage kommende vorausfahrende Fahrzeug, das in jedem Parameter besser ist als alle anderen in Frage kommenden vorausfahrenden Fahrzeuge, als das vorausfahrende Fahrzeug ausgewählt wird, wobei das vorausfahrende Fahrzeug berechtigt ist, die Fahrzeuggruppe zu verwalten.

2. Verfahren nach Anspruch 1, wobei die Auslösemeldung mit den Bedingungen getragen wird, die erforderlich sind, um als das in Frage kommende Fahrzeug bedient zu werden, und das Bestimmen, ob das Fahrzeug selbst die Bedingungen erfüllt, die erforderlich sind, um als das in Frage kommende Fahrzeug bedient zu werden, eines der Folgenden umfasst:
Lesen der Auslösemeldung durch das Fahrzeug in der Fahrzeuggruppe und Bestimmen, ob das Fahrzeug selbst die Bedingungen erfüllt, die es erfordert, um als das in Frage kommende vorausfahrende Fahrzeug in der Auslösemeldung zu dienen; und
wenn das Fahrzeug in der Fahrzeuggruppe die Auslösemeldung nicht liest, Bestimmen durch das Fahrzeug in der Fahrzeuggruppe, ob das Fahrzeug selbst in der Lage ist, als das in Frage kommende vorausfahrende Fahrzeug gemäß den lokal gespeicherten Bedingungen bedient zu werden.

3. Verfahren nach Anspruch 2, wobei
wenn die in Frage kommenden vorausfahrenden Fahrzeuge äquivalente Parameter aufweisen, Auswählen durch die in Frage kommenden vorausfahrenden Fahrzeuge in der Fahrzeuggruppe eines der Folgenden als das vorausfahrende Fahrzeug: ein Fahrzeug mit minimaler Ausrüstungskennung; ein Fahrzeug mit der größten Ausrüstungsfähigkeit; ein Fahrzeug mit optimaler Signalqualität der Kommunikationsausrüstung und ein Fahrzeug mit optimalem Standort in der Fahrzeuggruppe.

4. Verfahren nach Anspruch 2, wobei nach dem Auswählen durch die in Frage kommenden vorausfahrenden Fahrzeuge in der Fahrzeuggruppe eines der in Frage kommenden vorausfahrenden Fahrzeuge als vorausfahrendes Fahrzeug gemäß einer voreingestellten Regel, die einen Vergleich der eigenen Parameter des Fahrzeugs mit den Parametern der in Frage kommenden vorausfahrenden Fahrzeuge beinhaltet, das Verfahren ferner umfasst:
bevor ein aktuell vorausfahrendes Fahrzeug der Fahrzeuggruppe autorisiert wird, die Fahrzeuggruppe zu verwalten, Empfangen einer ersten Auslösemeldung für die erneute Auswahl von in Frage kommenden vorausfahrenden Fahrzeugen, die von der netzseitigen Ausrüstung und/oder dem aktuell vorausfahrenden Fahrzeug übertragen wird, durch jedes Fahrzeug in der Fahrzeuggruppe, wobei die erste Auslösemeldung mit den Bedingungen getragen wird, die erforderlich sind, um als das in Frage kommende vorausfahrende Fahrzeug bedient zu werden; und
Bestimmen, durch jedes Fahrzeug in der Fahrzeuggruppe, ob die Parameter des Fahrzeugs selbst die Bedingungen erfüllen, die es erfordert, um als das in Frage kommende vorausfahrende Fahrzeug zu dienen.

5. Verfahren nach Anspruch 3, wobei nach der Bestimmung der in Frage kommenden vorausfahrenden Fahrzeuge aus der Fahrzeuggruppe das Verfahren ferner umfasst:
Empfangen durch ein Fahrzeug, das nicht als das in Frage kommende vorausfahrende Fahrzeug in der Fahrzeuggruppe bedient wird, einer zweiten Benachrichtigungsnachricht, die von einem Fahrzeug gesendet wird, das als das in Frage kommende vorausfahrende Fahrzeug dient, wobei die zweite Benachrichtigungsnachricht anzeigt, dass das Fahrzeug, von dem die zweite Benachrichtigungsnachricht gesendet wird, das in Frage kommende vorausfahrende Fahrzeug geworden ist; und
nach dem Empfangen der zweiten Benachrichtigungsnachricht wird das Fahrzeug, das nicht als vorausfahrendes Fahrzeug bedient wird, zum in Frage kommenden vorausfahrenden Fahrzeug, wenn basierend auf der zweiten Benachrichtigungsnachricht bestimmt wird, dass die Parameter des Fahrzeugs, das nicht als vorausfahrendes Fahrzeug in der Fahrzeuggruppe dient, besser sind als die des Fahrzeugs, das als vorausfahrendes Fahrzeug bedient wird; oder das Fahrzeug, das nicht als vorausfahrendes Fahrzeug in der Fahrzeuggruppe bedient wird, selbst verhindert, dass es als das vorausfahrendes Fahrzeug bedient wird.

6. Vorrichtung zum Auswählen eines vorausfahrenden Fahrzeugs einer Fahrzeuggruppe, die in jedem Fahrzeug der Fahrzeuggruppe angeordnet ist und Folgendes umfasst:
ein Bestimmungsmodul (52), das konfiguriert ist zum:
Bestimmen, ob jedes Fahrzeug in der Fahrzeuggruppe die Bedingungen erfüllt, die erforderlich sind, um als ein in Frage kommendes vorausfahrendes Fahrzeug bedient zu werden, nachdem eine Auslösemeldung zur Auswahl von in Frage kommenden vorausfahrenden Fahrzeugen, die von einer netzseitigen Ausrüstung gesendet wurde, empfangen wurde, wobei die Bedingungen eine Anforderung an die Ausrüstungsfähigkeit des Fahrzeugs, Informationen über den Standort des Fahrzeugs in der Fahrzeuggruppe und Informationen über die Signalqualität der Ausrüstungen des Fahrzeugs umfassen;
ein Auswahlmodul (54), das konfiguriert ist zum:
wenn bestimmt wird, dass das Fahrzeug selbst die Bedingungen erfüllt, wird das Fahrzeug ein in Frage kommendes vorausfahrendes Fahrzeug, und eine erste Benachrichtigungsnachricht wird an alle Fahrzeuge in der Fahrzeuggruppe gesendet, wobei die erste Benachrichtigungsnachricht konfiguriert ist, um mitzuteilen, dass das Fahrzeug das in Frage kommende vorausfahrende Fahrzeug geworden ist, und um Parameter des Fahrzeugs zu tragen, wobei die Parameter Informationen über die Ausrüstungsfähigkeit des Fahrzeugs, Informationen über den Standort des Fahrzeugs in der Fahrzeuggruppe und Informationen über die Signalqualität der Kommunikationsausrüstung in dem Fahrzeug umfassen; und
nach dem Empfangen der ersten Benachrichtigung, Auswählen eines der in Frage kommenden vorausfahrenden Fahrzeuge als vorausfahrendes Fahrzeug gemäß einer voreingestellten Regel, die einen Vergleich der eigenen Parameter des Fahrzeugs mit den Parametern der in Frage kommenden vorausfahrenden Fahrzeuge beinhaltet, und wobei das in Frage kommende vorausfahrende Fahrzeug, das in jedem Parameter besser ist als alle anderen in Frage kommenden vorausfahrenden Fahrzeuge, als das vorausfahrende Fahrzeug ausgewählt wird, wobei das vorausfahrende Fahrzeug berechtigt ist, die Fahrzeuggruppe zu verwalten.

7. Vorrichtung nach Anspruch 6, wobei die Auslösemeldung mit den Bedingungen getragen wird, die erforderlich sind, um als das in Frage kommende vorausfahrende Fahrzeug bedient zu werden, und das Bestimmungsmodul (52) mindestens eines der Folgenden umfasst:
eine erste Bestimmungseinheit (62), die dazu konfiguriert ist, die Auslösemeldung zu lesen und zu bestimmen, ob das Fahrzeug selbst die Bedingungen erfüllt, die erforderlich sind, um als das in Frage kommende vorausfahrende Fahrzeug in der Auslösemeldung bedient zu werden; oder
eine zweite Bestimmungseinheit (64), die dazu konfiguriert ist, wenn das Fahrzeug in der Fahrzeuggruppe die Auslösemeldung nicht liest, zu bestimmen, ob das Fahrzeug in der Lage ist, als das in Frage kommende vorausfahrende Fahrzeug gemäß den lokal gespeicherten Bedingungen bedient zu werden.

8. Vorrichtung nach Anspruch 7, wobei das Auswahlmodul eine zweite Auswahleinheit (74) umfasst, die dazu konfiguriert ist, wenn die in Frage kommenden vorausfahrenden Fahrzeuge äquivalente Parameter aufweisen, eines der Folgenden als das vorausfahrende Fahrzeug auszuwählen: ein Fahrzeug mit minimaler Ausrüstungskennung; ein Fahrzeug mit größter Ausstattungsfähigkeit; ein Fahrzeug mit optimaler Signalqualität von Kommunikationseinrichtungen und ein Fahrzeug mit optimaler Platzierung in der Fahrzeuggruppe.

## Revendications

1. Procédé de sélection d'un véhicule principal dans un groupe de véhicules, le procédé comprenant :
la réception (S402), par chaque véhicule du groupe de véhicules, d'un message de commande pour sélectionner des véhicules principaux candidats transmis depuis un équipement côté réseau, et le fait de déterminer si ledit véhicule lui-même remplit les conditions requises pour servir comme véhicule principal candidat, dans lequel les conditions comprennent une exigence sur la capacité d'équipement dudit véhicule, des informations sur l'emplacement du véhicule dans le groupe de véhicules et des informations sur la qualité du signal des équipements du véhicule ;
s'il est déterminé que ledit véhicule lui-même remplit les conditions, ledit véhicule devient un véhicule principal candidat, et l'envoi, par ledit véhicule, d'un premier message de notification à tous les véhicules du groupe de véhicules, le premier message de notification étant configuré pour notifier que ledit véhicule est devenu le véhicule principal candidat et pour transmettre les paramètres dudit véhicule, dans lequel les paramètres comprennent des informations sur la capacité de l'équipement dudit véhicule, des informations sur l'emplacement dudit véhicule dans le groupe de véhicules et des informations sur la qualité du signal de l'équipement de communication dans ledit véhicule ; et
après avoir reçu ladite première notification, la sélection (S404), par les véhicules principaux candidats du groupe de véhicules, de l'un des véhicules principaux candidats comme véhicule principal selon une règle prédéfinie impliquant la comparaison des paramètres propres dudit véhicule avec les paramètres des véhicules principaux candidats et dans lequel le véhicule principal candidat qui est meilleur que tout autre véhicule principal candidat pour chaque paramètre est sélectionné comme véhicule principal, dans lequel le véhicule principal est autorisé à gérer le groupe de véhicules.

2. Procédé selon la revendication 1, dans lequel le message de commande est transmis avec les conditions requises pour servir comme véhicule principal candidat, et le fait de déterminer si ledit véhicule lui-même remplit les conditions requises pour servir comme véhicule principal candidat comprend l'un des éléments suivants :
la lecture, par ledit véhicule du groupe de véhicules, du message de commande, et le fait de déterminer si ledit véhicule lui-même remplit les conditions requises pour servir comme véhicule principal candidat transmises dans le message de commande ; et
lorsque ledit véhicule du groupe de véhicules ne parvient pas à lire le message de commande, le fait de déterminer, par ledit véhicule du groupe de véhicules, si ledit véhicule lui-même est capable de servir comme véhicule principal candidat selon des conditions stockées localement.

3. Procédé selon la revendication 2, dans lequel
lorsque les véhicules principaux candidats ont des paramètres équivalents, la sélection, par les véhicules principaux candidats du groupe de véhicules, de l'un des éléments suivants comme véhicule principal : un véhicule avec un identifiant d'équipement minimal ; un véhicule avec la plus grande capacité d'équipement ; un véhicule avec une qualité de signal optimale de l'équipement de communication et un véhicule avec un emplacement optimal dans le groupe de véhicules.

4. Procédé selon la revendication 2, dans lequel après sélection, par les véhicules principaux candidats du groupe de véhicules, l'un des véhicules principaux candidats comme véhicule principal selon une règle prédéfinie impliquant la comparaison des paramètres propres dudit véhicule avec les paramètres des véhicules principaux candidats, le procédé comprend en outre :
avant qu'un véhicule principal actuel du groupe de véhicules ne soit autorisé à gérer le groupe de véhicules, la réception, par chaque véhicule du groupe de véhicules, d'un premier message de commande pour resélectionner des véhicules principaux candidats transmis depuis l'équipement côté réseau et/ou le véhicule principal actuel, dans lequel le premier message de commande est transmis avec les conditions requises pour servir comme véhicule principal candidat ; et
le fait de déterminer, par chaque véhicule du groupe de véhicules, si des paramètres dudit véhicule lui-même remplissent les conditions requises servir comme véhicule principal candidat.

5. Procédé selon la revendication 3, dans lequel après détermination des véhicules principaux candidats du groupe de véhicules, le procédé comprend en outre :
la réception, par un véhicule non servi comme véhicule principal candidat dans le groupe de véhicules, d'un second message de notification transmis depuis un véhicule servant de véhicule principal candidat, dans lequel le second message de notification indique que le véhicule à partir duquel le second message de notification est transmis est devenu le véhicule principal candidat ; et
après réception du second message de notification, le véhicule non servi comme véhicule principal candidat devient le véhicule principal candidat s'il est déterminé sur la base du second message de notification que les paramètres du véhicule non servi comme véhicule principal candidat du groupe de véhicules sont meilleurs que ceux du véhicule servant de véhicule principal candidat ; ou le véhicule non servi comme véhicule principal candidat du groupe de véhicules s'empêche de servir comme véhicule principal candidat.

6. Dispositif de sélection d'un véhicule principal d'un groupe de véhicules, disposé dans chaque véhicule du groupe de véhicules et comprenant :
un module de détermination (52) configuré pour :
déterminer si chaque véhicule du groupe de véhicules remplit les conditions requises pour servir comme véhicule principal candidat, après réception d'un message de commande pour sélectionner les véhicules principaux candidats transmis depuis un équipement côté réseau, dans lequel les conditions comprennent une exigence sur la capacité d'équipement dudit véhicule, des informations sur l'emplacement du véhicule dans le groupe de véhicules et des informations sur la qualité du signal des équipements du véhicule ;
un module de sélection (54) configuré pour :
s'il est déterminé que ledit véhicule lui-même remplit les conditions, ledit véhicule devient un véhicule principal candidat, et un premier message de notification est envoyé à tous les véhicules du groupe de véhicules, le premier message de notification étant configuré pour notifier que ledit véhicule est devenu le véhicule principal candidat et pour transmettre les paramètres dudit véhicule, dans lequel les paramètres comprennent des informations sur la capacité de l'équipement dudit véhicule, des informations sur l'emplacement dudit véhicule dans le groupe de véhicules et des informations sur la qualité du signal de l'équipement de communication dans ledit véhicule ; et
après avoir reçu ladite première notification, sélectionner l'un des véhicules principaux candidats comme véhicule principal selon une règle prédéfinie impliquant la comparaison des paramètres propres dudit véhicule avec les paramètres des véhicules principaux candidats et dans lequel le véhicule principal candidat qui est meilleur que tout autre véhicule principal candidat pour chaque paramètre est sélectionné comme véhicule principal, dans lequel le véhicule principal est autorisé à gérer le groupe de véhicules.

7. Dispositif selon la revendication 6, dans lequel le message de commande est transmis avec les conditions requises pour servir comme véhicule principal candidat, et le module de détermination (52) comprend au moins l'un des éléments suivants :
une première unité de détermination (62) configurée pour lire le message de commande, et le fait de déterminer si ledit véhicule lui-même remplit les conditions requises pour servir comme véhicule principal candidat transmises dans le message de commande ; ou
une seconde unité de détermination (64) configurée pour, lorsque ledit véhicule du groupe de véhicules ne parvient pas à lire le message de commande, déterminer si ledit véhicule est capable de servir comme véhicule principal candidat selon des conditions stockées localement.

8. Dispositif selon la revendication 7, dans lequel le module de sélection comprend une seconde unité de sélection (74) configurée pour, lorsque les véhicules principaux candidats ont des paramètres équivalents, sélectionner l'un des éléments suivants comme véhicule principal : un véhicule avec un identifiant d'équipement minimal ; un véhicule avec la plus grande capacité d'équipement ; un véhicule avec une qualité de signal optimale de l'équipement de communication et un véhicule avec un emplacement optimal dans le groupe de véhicules.
